# EUROPEAN PATENT APPLICATION

(11) **EP 1 531 398 A1**
(43) Date of publication of application: **18.05.2005**
(21) Application number: 04727137.4
(22) Date of filing: 13.04.2004
(51) Int. Cl.: G06F 15/00, G06F 12/14, H04L 9/32

(54) **TERMINAL DEVICE, PROVISION SERVER, ELECTRONIC INFORMATION UTILIZATION METHOD, ELECTRONIC INFORMATION PROVISION METHOD, TERMINAL DEVICE PROGRAM, PROVISION SERVER PROGRAM, INTERMEDIATE PROGRAM AND RECORDING MEDIUM**

(30) Priority: 30.04.2003 JP 2003125771
(71) Applicant: Sony Corporation, Tokyo 141-0001 (JP)
(72) Inventor: MIURA, Takayuki, Shinagawa-ku Tokyo 141-0001 (JP); SUZUKI, Naoshi, Shinagawa-ku Tokyo 141-0001 (JP); KATSUBE, Tomohiro, Shinagawa-ku Tokyo 141-0001 (JP); YUZAWA, Keiji, Shinagawa-ku Tokyo 141-0001 (JP); OTANI, Junichi, Shinagawa-ku Tokyo 141-0001 (JP); MASUDA, Takafumi, Shinagawa-ku Tokyo 141-0001 (JP)
(74) Representative: Mills, Julia
(86) International application number: PCT/JP2004/005256
(87) International publication number: WO 2004/097659

(57) **Abstract**

The present invention provides a device-authentication system capable of efficiently performing authentication before using a service through a network. A CE device (3) includes a browser (9) for accessing a service server (4) and an authentication module (7) for allowing an authentication server (5) to perform device authentication. A device-authentication plug-in (8) is a plug-in having a function of starting the authentication module (7). The device-authentication plug-in (8) can be specified by a predetermined MIME format, and the browser (9) starts the device-authentication plug-in (8) after receiving an EMBED tag having the MIME format.

## Description

### Technical Field

The present invention relates to a device-authentication system, in particular, to a method for efficiently authenticating a device by incorporating an extension for device authentication into a browser.

### Background Art

Hereinafter, related art (1): a method for using content by using a CE device; and related art (2): extension of a browser function using a plug-in will be described.

### (Related Art 1)

In recent years, CE (consumer electronics) devices have been becoming widespread.

A CE device is an electronic device including a computer and is capable of using services through a network. By accessing a service server, the device can use various services provided by the service server.

In this case, content is downloaded from the service server and is then used.

Some pieces of content provided by the service server can be freely used on a browser. Whereas, others include dedicated content used in a dedicated application and content that needs user authentication before downloading it.

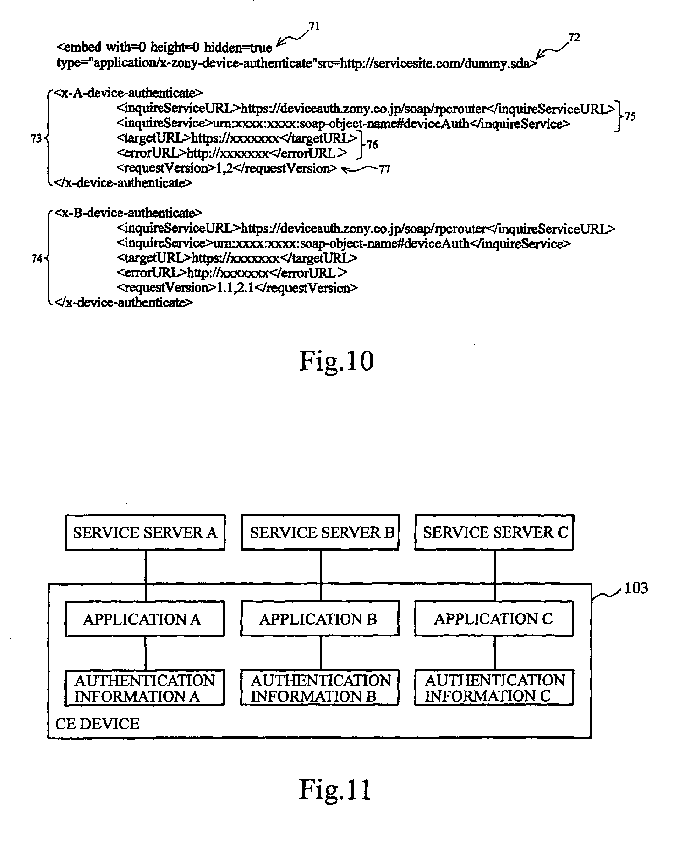

Fig. 11 illustrates an example of the configuration of a known CE device.

A CE device 103 includes an application A for using content provided by a service server A and authentication information A used by the service server A for authenticating the user.

When the CE device 103 requests transmission of content to the service server A, the service server A requests user authentication, and accordingly, the CE device 103 transmits the authentication information A to the service server A.

The service server A authenticates the user based on the authentication information A and then transmits the content to the CE device 103. In this way, the CE device 103 can use the content in the application A.

Also, the CE device 103 includes an application B for a service server B, authentication information B, an application C for a service server C, and authentication information C.

In this way, the known CE device 103 needs to store authentication information for each application.

In order to perform authentication of application, an authentication screen is displayed on a display, and the user has to input required information on the authentication screen and to transmit the information to a service server.

When the user wants to search for desired content in a browser so as to use it, he/she has to switch from the browser screen to the authentication screen and to perform authentication. Therefore, the process of searching for the content and using it cannot be seamlessly performed.

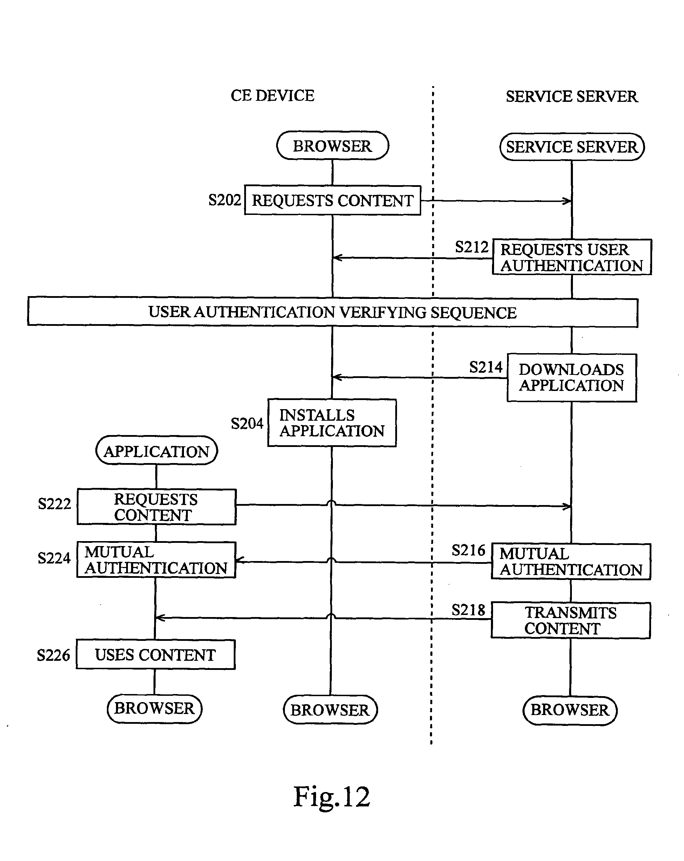

Fig. 12 is a flowchart illustrating an example of a process which is performed when the known CE device downloads content.

Herein, the content is dedicated content used in a predetermined application and requires user authentication before downloading the content.

A browser in the CE device accesses a service server and requests download of content (step 202).

The service server requests user authentication to the browser (step 212).

Accordingly, user authentication is performed between the CE device and the service server based on a predetermined sequence.

After authentication has been done, the service server allows the CE device to download an application for using the content (step 214).

Then, the CE device installs the downloaded application therein (step 204).

If the application has already been installed, steps 214 and 204 are omitted.

Then, the installed application requests download of the contents to the service server (step 222).

The application and the service server perform mutual authentication (steps 224 and 216) and then the service server transmits the content to the application (step 218).

The application receives and uses the content (step 226).

### (Related Art 2)

Next, extension of a browser function by using a plug-in will be described.

A browser has basic functions, such as a display function of interpreting an HTML (Hypertext Markup Language) document and displaying a screen on a display; a communicating function of accessing a site specified by a set URL so as to download data or transmit data to the site; and a jump function of jumping to a linked URL (Uniform Resource Locators) in the HTML document.

In addition to these basic functions, an application called a plug-in can be added to the browser so as to extend the function of the browser.

For example, a browser generally does not have a function of playing back moving pictures or music data. However, by adding a moving-picture playback plug-in or a music playback plug-in to the browser, moving pictures or music data can be played back in the browser.

Usually, startup of these plug-ins are dynamically performed. The browser starts a corresponding plug-in according to the type of content and requests the content.

In order to start a plug-in, tag information called an EMBED tag is prepared in the HTML. In the EMBED tag, a plug-in to be started can be specified by setting a parameter of a MIME format.

The URL as the download address of the content used in the plug-in is specified by an SRC parameter which is set in the EMBED tag.

If an EMBED tag exists in the received HTML document, the browser interprets the MIME format and starts a plug-in suitable for the data format of the content, and also downloads the content from the URL specified by the SRC parameter.

Accordingly, the user can use the downloaded content by the started plug-in.

An example of a technique using the EMBED tag includes PCT Japanese Translation Patent Publication No. 2001-527668.

In this technique, in a system for selecting various types of video data from a distribution site in a distributed environment and for decompressing the data, a smart mirror holding a group of different file format data is placed, so that a user's request is guided to an optimum mirror site.

In this technique, the EMBED tag of the HTML document is analyzed before downloading a video clip or voice clip. Then, when download of the specified file is started, the file format is analyzed.

However, as described above, authentication information must be prepared for each application in the known CE device, and thus a memory cannot be efficiently used.

When a user wants to use dedicated content, he/she has to perform authentication and start an application. Thus, the user cannot seamlessly perform a process of selecting content in a browser and using the content.

Accordingly, an object of the present invention is to provide a device-authentication system capable of efficiently performing authentication before using a service through a network.

### Disclosure of Invention

In order to achieve the above-described object, the present invention provides a terminal device including display means; mediating means; and authentication-information transmitting means. The display means includes a display function for displaying electronic information provided through a network so that a user can browse the information; a specifying-information receiving function for receiving specifying information for specifying the mediating means; and a specifying function for specifying the mediating means by using the received specifying information. The mediating means is specified by the specifying function and starts the authentication-information transmitting means. The authentication-information transmitting means is started by the mediating means and transmits device-authentication information to an authentication server. (First configuration)

Herein, the first configuration may include authentication-result receiving means for receiving an authentication result from the authentication server; authentication-result transmitting means for transmitting the received authentication result to a providing server for providing electronic information; and electronic-information receiving means for receiving electronic information transmitted from the providing server based on the transmitted authentication result. (Second configuration)

Herein, the mediating means of the second configuration may include a using function for using electronic information received from the providing server.

The second configuration may further include requesting means for requesting electronic information to the providing server. The specifying-information receiving function may receive specifying information which is transmitted from the providing server based on the request.

In the first configuration, the specifying-information receiving function may receive specifying information including access information used for accessing the authentication server, and the authentication-information transmitting means may access the authentication server by using the received access information. (Third configuration)

In the third configuration, the authentication server may include a plurality of authentication servers, and the specifying-information receiving function may receive specifying information including access information for each of the authentication servers ranked in an access precedence order.

In the second configuration, the specifying-information receiving function may receive specifying information including access information used for accessing the providing server, and the authentication-result transmitting means may accesses the providing server by using the received access information.

A providing server for providing electronic information to the terminal device of the second configuration is also provided. The providing server includes specifying-information transmitting means for transmitting specifying information used by the display means of the terminal device for specifying the mediating means which starts the authentication-information transmitting means; authentication-result receiving means for receiving an authentication result from the terminal device; and electronic-information transmitting means for transmitting electronic information based on the received authentication result. (Fourth configuration)

The providing server of the fourth configuration may include request receiving means for receiving a request for electronic information from the terminal device, and the specifying-information transmitting means may transmit the specifying information based on the received request.

Also, the providing server of the fourth configuration may include authentication-information receiving means for receiving authentication information from the terminal device and authentication means for authenticating the terminal device by using the received authentication information. In that case, the electronic-information transmitting means transmits electronic information to the terminal device based on the authentication result generated by the authentication means.

Also, in order to achieve the above-described object, the present invention provides an electronic-information using method performed in a computer including display means; mediating means; and authentication-information transmitting means. The method includes a display step of realizing, by the display means, a display function for displaying electronic information provided through a network so that a user can browse the information, a specifying-information receiving function for receiving specifying information for specifying the mediating means, and a specifying function for specifying the mediating means by using the received specifying information; a mediating step of specifying the mediating means by the specifying function in the display step and allowing the mediating means to start the authentication-information transmitting means; and an authentication-information transmitting step of transmitting device-authentication information to an authentication server by starting the authentication-information transmitting means in the mediating step. (Fifth configuration)

In the fifth configuration, the computer may further include authentication-result receiving means; authentication-result transmitting means; and electronic-information receiving means. The electronic-information using method may include an authentication-result receiving step of receiving, by the authentication-result receiving means, an authentication result from the authentication server; an authentication-result transmitting step of transmitting, by the authentication-result transmitting means, the received authentication result to a providing server for providing electronic information; and an electronic-information receiving step of receiving, by the electronic-information receiving means, electronic information transmitted from the providing server based on the transmitted authentication result. (Sixth configuration)

In the sixth configuration, the mediating means may include a using function for using electronic information received from the providing server, and the electronic-information using method may include a using step of using, in the mediating means, electronic information received from the providing server.

The sixth configuration may further include requesting means for requesting electronic information to the providing server. In the specifying-information receiving step, specifying information which is transmitted from the providing server based on the request may be received.

In the fifth configuration, the specifying-information receiving function may receive specifying information including access information used for accessing the authentication server, and, in the authentication-information transmitting step, the received access information may be used so as to access the authentication server. (Seventh configuration)

In the seventh configuration, the authentication server may include a plurality of authentication servers, and the specifying-information receiving function may receive specifying information including access information for each of the authentication servers ranked in an access precedence order.

In the sixth configuration, the specifying-information receiving function may receive specifying information including access information used for accessing the providing server, and, in the authentication-result transmitting step, the received access information may be used so as to access the providing server.

Further, in order to achieve the above-described object, the present invention provides an electronic-information providing method used in a providing server for providing electronic information to the terminal device of the second configuration. The providing server includes specifying-information transmitting means; authentication-result receiving means; and electronic-information transmitting means. The electronic-information providing method includes a specifying-information transmitting step of transmitting, by the specifying-information transmitting means, specifying information used by the display means of the terminal device for specifying the mediating means for starting the authentication-information transmitting means; an authentication-result receiving step of receiving, by the authentication-result receiving means, an authentication result from the terminal device; and an electronic-information transmitting step of transmitting, by the electronic-information transmitting means, electronic information based on the received authentication result.

### (Eighth configuration)

In the eighth configuration, the providing server may further include request receiving means. The electronic-information providing method may include a request receiving step of receiving, by the request receiving means, a request for electronic information from the terminal device. In the specifying-information transmitting step, the specifying information may be transmitted based on the request received in the request receiving step.

In the eighth configuration, the providing server may further include authentication-information receiving means and authentication means. The electronic-information providing method may include an authentication-information receiving step of receiving, by the authentication-information receiving means, authentication information from the terminal device; and an authentication step of authenticating, by the authentication means, the terminal device by using the received authentication information. In the electronic-information transmitting step, electronic-information may be transmitted to the terminal device based on the authentication result generated in the authentication step.

Still further, in order to achieve the above-described object, the present invention provides a terminal-device program for realizing, in a computer, a display function; a mediating function; and an authentication-information transmitting function. The display function includes a display function for displaying electronic information provided through a network so that a user can browse the information; a specifying-information receiving function for receiving specifying information for specifying the mediating function; and a specifying function for specifying the mediating function by using the received specifying information. The mediating function is specified by the specifying function and starts the authentication-information transmitting function, and the authentication-information transmitting function is started by the mediating function and transmits device-authentication information to an authentication server. (Ninth configuration)

In the ninth configuration, an authentication-result receiving function for receiving an authentication result from the authentication server; an authentication-result transmitting function for transmitting the received authentication result to a providing server for providing electronic information; and an electronic-information receiving function for receiving electronic information transmitted from the providing server based on the transmitted authentication result, may be realized in the computer. (Tenth configuration)

In the tenth configuration, the mediating function may include a using function for using electronic information received from the providing server.

In the tenth configuration, the terminal-device program may further realizes a requesting function for requesting electronic information to the providing server, and the specifying-information receiving function may receive specifying information transmitted from the providing server based on the request.

In the ninth configuration, the specifying-information receiving function may receive specifying information including access information used for accessing the authentication server, and the authentication-information transmitting function may access the authentication server by using the received access information. (Eleventh configuration)

In the eleventh configuration, the authentication server may include a plurality of authentication servers, and the specifying-information receiving function may receive specifying information including access information for each of the authentication servers ranked in an access precedence order.

In the tenth configuration, the specifying-information receiving function may receive specifying information including access information used for accessing the providing server, and the authentication-result transmitting function may accesses the providing server by using the received access information.

Also, in order to achieve the above-describe object, the present invention provides a providing-server program for providing electronic information to the terminal device of the second configuration. The program realizes, in a computer, a specifying-information transmitting function for transmitting specifying information used by the display function of the terminal device for specifying the mediating function which starts the authentication-information transmitting function; an authentication-result receiving function for receiving an authentication result from the terminal device; and an electronic-information transmitting function for transmitting electronic information based on the received authentication result. (Twelfth configuration)

The providing-server program of the twelfth configuration may realize, in the computer, a request receiving function for receiving a request for electronic information from the terminal device, and the specific-information transmitting function may transmit the specific information based on the received request.

The providing-server program of the twelfth configuration may realize, in the computer, an authentication-information receiving function for receiving authentication information from the terminal device; and an authentication function for authenticating the terminal device by using the received electronic information. In that case, the electronic-information transmitting function transmits electronic information to the terminal device based on the authentication result generated by the authentication function.

Furthermore, the present invention provides a computer-readable storage medium storing a terminal-device program for realizing, in a computer, a display function; a mediating function; and an authentication-information transmitting function. The display function includes a display function for displaying electronic information provided through a network so that a user can browse the information; a specifying-information receiving function for receiving specifying information for specifying the mediating function; and a specifying function for specifying the mediating function by using the received specifying information. The mediating function is specified by the specifying function and starts the authentication-information transmitting function. The authentication-information transmitting function is started by the mediating function and transmits device-authentication information to an authentication server.

Also, the present invention provides a computer-readable storage medium storing a providing-server program for providing electronic information to the terminal device of the second configuration. The program realizes, in a computer, a specifying-information transmitting function for transmitting specifying information used by the display function of the terminal device for specifying the mediating function which starts the authentication-information transmitting function; an authentication-result receiving function for receiving an authentication result from the terminal device; and an electronic-information transmitting function for transmitting electronic information based on the received authentication result.

Further, the present invention provides a mediating program for realizing, in a computer, the mediating means of the first configuration. The program realizes a mediating function for starting the authentication-information transmitting means of the terminal device by receiving specification from the display means of the terminal device which has received specifying information.

Still further, the present invention provides a computer-readable storage medium storing a mediating program for realizing, in a computer, the mediating means of the first configuration. The program realizes a mediating function for starting the authentication-information transmitting means of the terminal device by receiving specification from the display means of the terminal device which has received specifying information.

### Brief Description of the Drawings

Fig. 1 illustrates the overview of a device-authentication system of an embodiment.
Fig. 2 illustrates the configuration of the device-authentication system of the embodiment.
Fig. 3 shows an example of the module structure of a CE device 3.
Fig. 4 shows an example of the hardware structure of the CE device 3.
Fig. 5 shows an example an EMBED tag included in an authentication trigger.
Fig. 6 is a flowchart illustrating a process which is performed when the CE device downloads content from a service server.
Fig. 7 is a flowchart illustrating a process which is performed when a CE device of modification 1 downloads content from a service server.
Fig. 8 illustrates the module structure of a CE device according to modification 2.
Fig. 9 illustrates an example of an EMBED tag according to modification 3.
Fig. 10 illustrates an example of an EMBED tag according to modification 4.
Fig. 11 illustrates an example of the configuration of a known CE device.
Fig. 12 is a flowchart illustrating an example of a process which is performed when the known CE device downloads content.

### Best Mode for Carrying Out the Invention

Hereinafter, a preferred embodiment of the present invention will be described in detail with reference to the drawings.

### [Outline of the embodiment]

In the embodiment, an authentication request of content requiring authentication is realized by using a plug-in mechanism. By embedding information about authentication in information for starting a plug-in, an authentication trigger is generated. A terminal device (CE device) receives the authentication trigger, performs a required authentication process, and then requests content.

Further, in the embodiment, a common module and common authentication information as an authentication function is shared by a plurality of applications, so that an authentication mechanism need not be prepared for each application.

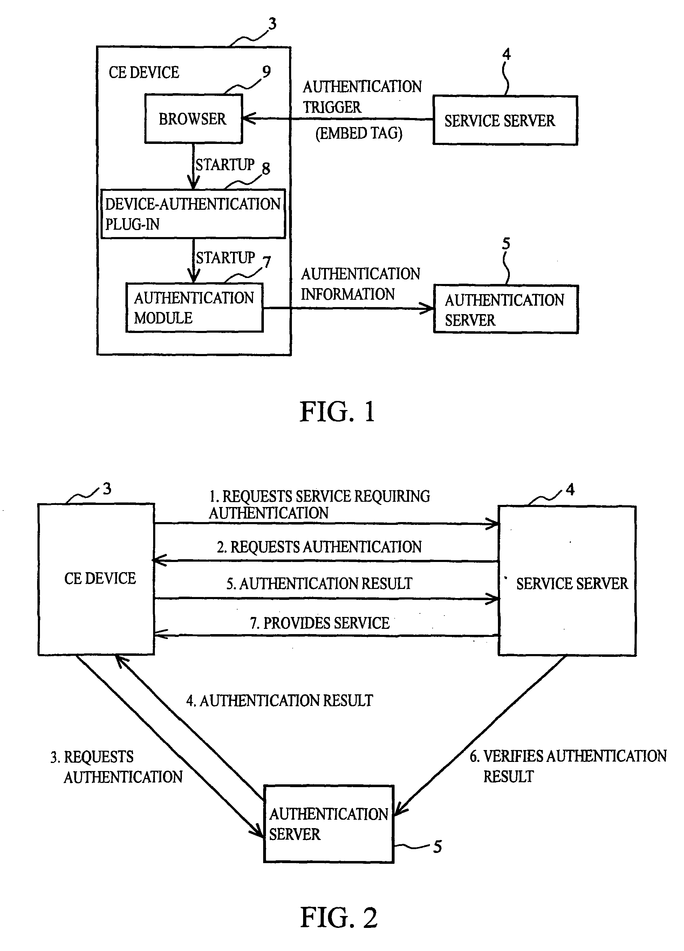

Fig. 1 illustrates the overview of a device-authentication system of the embodiment.

A CE device 3 includes a browser 9 for accessing a service server 4 and an authentication module 7 for allowing an authentication server 5 to perform device authentication.

A device-authentication plug-in 8 has a function of starting the authentication module 7.

The device-authentication plug-in 8 can be specified with a predetermined MIME format. The browser 9 starts the device-authentication plug-in 8 upon receiving an EMBED tag having this MIME format.

In the device-authentication system having the above-described configuration, the service server 4 transmits an authentication trigger (information triggering device authentication by the CE device 3) including an EMBED tag for starting the device-authentication plug-in 8, so as to allow the CE device 3 to perform device authentication.

The browser 9 specifies the device-authentication plug-in 8 based on the MIME format of the EMBED tag and starts the plug-in.

Then, the device-authentication plug-in 8 starts the authentication module 7 and allows the authentication module 7 to transmit authentication information to the authentication server 5, which is allowed to perform device authentication.

Generally, a plug-in started by a browser mainly includes software for playing back data and providing it to a user, such as moving-picture playback software for playing back moving pictures and music playback software for playing back music data. However, the device-authentication plug-in 8 adds a function of starting the authentication module 7 to the browser 9.

As will be described below, the device-authentication plug-in 8 may have a function as an application client (hereinafter referred to as an application) for enabling use of content, in addition to the function of starting the authentication module 7.

### [Details of the embodiment]

Fig. 2 illustrates the configuration of the device-authentication system 1 of the embodiment.

In the device-authentication system 1, the CE device 3, the service server 4, and the authentication server 5 are connected through a network, such as the Internet, such that they can communicate with each other.

Although one each of the CE device 3 and the service server 4 are shown in Fig. 1 for simplicity, a plurality of CE devices and service servers may be provided.

The CE device 3 is an audio-visual apparatus, such as a video cassette recorder, a stereo, or a television set; or a home electric appliance, such as a rice cooker or a refrigerator; or another electronic device. The CE device 3 includes a computer and is capable of using a service through a network.

The CE device 3 stores authentication information required for device authentication, such as a device ID and a pass phrase. Accordingly, if the service server 4 requests device authentication before providing a service, the device authentication can be performed in the authentication server 5.

The pass phrase is a character string having the same function as a password, but the character string is longer in a pass phrase than in a password. Either of pass phrase or password may be used for device authentication.

The service server 4 includes a Web server or the like and provides a service to the CE device 3. The service server 4 has a service site specified by a predetermined URL. The CE device 3 can access the service server 4 by specifying this URL.

The service server 4 provides a service to the CE device 3 which has accessed the service site. The user can use the service provided by the service server 4 by using the CE device 3.

The services provided by the service server 4 include provision of music content, travel information content, movie content, or recipe content; provision of personal information including hobbies and tastes, information about a CE device, or setting parameters for connecting to the Internet; maintenance of a CE device; update of software; and remote control of a CE device such as a bath or an air conditioner.

Additionally, an online storage service and an affinity service (matching service between specifications and services of a device and required specifications and services from another device) can be provided.

Further, if the CE device 3 is a lavatory bowl, the service server 4 can provide a health service of checking the health condition of a user by sensing user's feces.

The service server 4 functions as a providing server for providing electronic information. Also, the service server 4 includes specifying-information transmitting means for transmitting an EMBED tag to the CE device 3, authentication-result receiving means for receiving an authentication result from the CE device 3, and electronic-information transmitting means for transmitting content based on the received authentication result.

Also, the service server 4 includes request receiving means for receiving a request when the CE device 3 performs browsing and requests transmission of content in the service server 4.

In the embodiment, content is used as an example of electronic information. However, the present invention is not limited to the content and other various types of electronic information for providing various services can be provided. The electronic information provided by the service server 4 covers a wide range, for example, remote control of a bath, update of software, and medical checkup using health information transmitted from a user, such as blood pressure and blood-sugar level.

The authentication server 5 authenticates the CE device 3 on behalf of the service server 4.

The authentication server 5 receives authentication information including a device ID and a pass phrase from the CE device 3 and authenticates the CE device 3.

Since the service server 4 can be set by an arbitrary individual or group, the authentication server 5 is provided separately in the embodiment so that authentication information requiring a high level of security is transmitted to the authentication server 5. Such a technique of authenticating a device by using an authentication server is described in International Application No. PCT/JP03/06180 filed on May 19, 2003, claiming priority of Japanese Patent Application No. 2002-144896 filed on May 20, 2002.

Alternatively, the system may be configured so that the service server 4 authenticates a device, as in the known art.

In that case, the service server 4 includes authentication-information receiving means for receiving authentication information from the CE device 3 and authentication means for authenticating the CE device 3 by using the received authentication information. If the CE device 3 has been authenticated, the service server 4 transmits content thereto.

In the device-authentication system 1 having the above-described configuration, when the service server 4 provides a service requiring device authentication, a process including the following series of steps is performed, the corresponding numbers being shown in the figure.

Step 1: The CE device 3 requests a service requiring device authentication to the service server 4.

Step 2: The service server 4 transmits an authentication trigger to the CE device 3 so as to request device authentication.

Step 3: The CE device 3 receives the authentication trigger from the service server 4 and transmits authentication information to the authentication server 5 so as to request device authentication.

Step 4: The authentication server 5 receives the authentication information from the CE device 3, authenticates the device, and transmits the authentication result to the CE device 3.

Step 5: The CE device 3 receives the authentication result from the authentication server 5 and transmits it to the service server 4.

Step 6: The service server 4 asks the authentication server 5 so as to make sure that the authentication server 5 has actually authenticated the device. For example, the authentication server 5 issues a onetime ID and attaches it to the authentication result at an authentication process, and then the service server 4 asks the authentication server 5 by using this onetime ID so as to verify the authentication result.

Step 7: The service server 4 receives verification of the authentication result from the authentication server 5 and then starts to provide the service to the CE device 3.

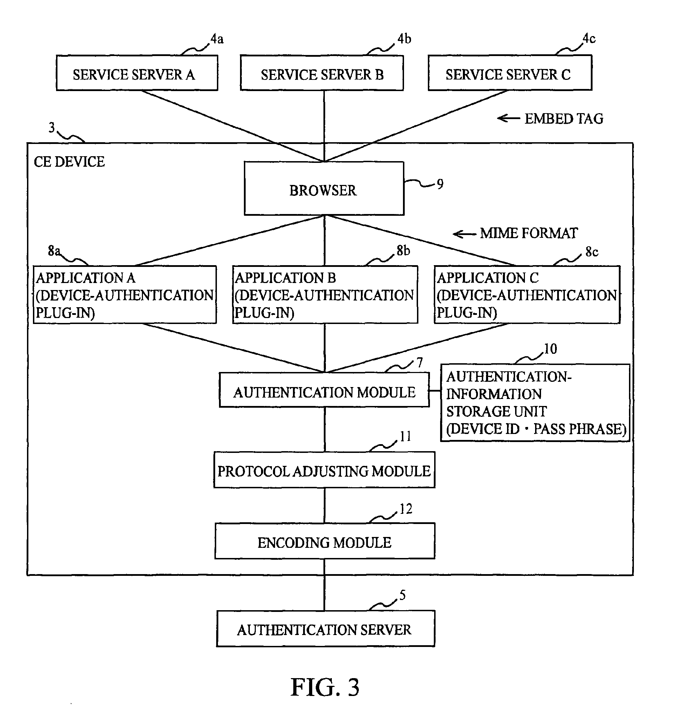

Fig. 3 shows an example of the module configuration of the CE device 3.

Only one service server 4 is shown in Fig. 2, whereas service servers 4a to 4c are shown in Fig. 3. Although the service servers 4a to 4c are capable of providing various services, they provide content in the following example.

The CE device 3 includes functional units, such as the browser 9, applications 8a to 8c, the authentication module 7, an authentication-information storage unit 10, a protocol adjusting module 11, and an encoding module 12.

The browser 9 connects the CE device 3 to a service site specified by an input URL so as to download content, interprets and displays content if the content is described in a markup language such as HTML, or transmits data to the service site specified by a URL.

If an EMBED tag is included in an HTML document, the browser 9 starts an application specified by an MIME format among the applications 8a to 8c.

The EMBED tag will be described in detail later.

The browser 9 serves as display means having a display function for displaying content (electronic information) on a network so that a user can browse the content.

As will be described later, the EMBED tag serves as specifying information for specifying the application 8a, 8b, or 8c.

The browser 9 includes a receiving function for receiving specifying information from the service server 4a, 4b, or 4c and a specifying function for specifying the application 8a, 8b, or 8c by using the received specifying information.

Further, the browser 9 includes requesting means for requesting transmission of content to the application 8a, 8b, or 8c.

Each of the applications 8a to 8c is a plug-in for extending the function of the browser 9 and allows a user to use content transmitted by the service server 4a, 4b, or 4c.

That is, the application 8a is a plug-in for using content provided by the service server 4a, and this is the same for the other applications.

Furthermore, each of the applications 8a to 8c is configured so as to start the authentication module 7 when being started by the browser 9. That is, the applications 8a to 8c have a function as the device-authentication plug-in 8 shown in Fig. 1.

As described above, the applications 8a to 8c serve as mediating means for mediating between the browser 9 and the authentication module 7, and are started when being specified by the browser 9 so as to start the authentication module 7.

Also, the applications 8a to 8c have a using function for using content.

Also, the applications 8a to 8c serve as electronic-information receiving means for receiving content transmitted by the service servers 4a to 4c, respectively.

The authentication-information storage unit 10 is a functional unit for providing information required for authenticating the CE device 3, such as a device ID and a pass phrase, to the authentication module 7.

The authentication module 7 is a functional unit for allowing the authentication server 5 to authenticate the CE device 3. The authentication module 7 communicates with the authentication server 5 when being started by the application (device-authentication plug-in) 8a, 8b, or 8c, and operates according to a series of device-authentication sequences.

More specifically, for example, the authentication module 7 reads a device ID and a pass phrase from the authentication-information storage unit 10 and transmits the authentication information to the authentication server 5, and receives an authentication result transmitted from the authentication server 5.

The authentication module 7 serves as authentication-information transmitting means for transmitting authentication information to the authentication server 5 by communicating with the authentication server 5.

Further, the authentication module 7 serves as authentication-result receiving means for receiving an authentication result transmitted by the authentication server 5.

In an unpublished patent document (Japanese Patent Application No. 2003-115755), the following device authentication method is proposed. That is, a group of random numbers generated by the authentication server 5 and pass phrases is hashed so as to generate a digest, and the authentication server 5 authenticates a device by using the digest. The authentication module 7 may be configured so as to use this authentication method.

In that case, the authentication module 7 receives random numbers from the authentication server 5 and generates a digest by using pass phrases, and then transmits the digest to the authentication server 5.

On the other hand, the authentication server 5 stores the random numbers transmitted to the authentication server 5, generates a digest based on pass phrases stored in advance and the random numbers, and determines whether the digest matches the digest received from the authentication module 7.

In this way, since the authentication module 7 outputs a pass phrase as a digest at each time, not in plain text, security can be enhanced.

The protocol adjusting module 11 is a functional unit for converting the protocol of data transmitted from the authentication module 7 to the authentication server 5 to a protocol used by the authentication server 5, and vice versa.

The encoding module 12 is a functional unit for encoding data in a communication path between the CE device 3 and the authentication server 5.

As an encoding method, SSL (secure sockets layer) is used, for example.

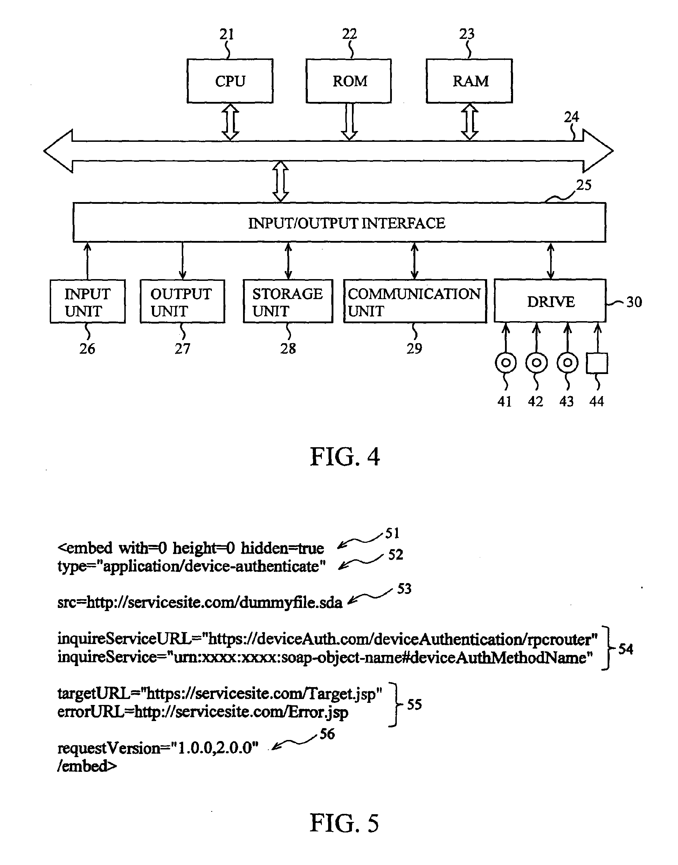

Fig. 4 shows an example of the hardware structure of the CE device 3.

A CPU (central processing unit) 21 executes various processing according to a program stored in a ROM (read only memory) 22 or a program downloaded from a storage unit 28 to a RAM (random access memory) 23.

The ROM 22 stores basic programs and parameters required for operating the CE device 3.

The RAM 23 provides a working area required by the CPU 21 for executing various processing.

The storage unit 28 stores various programs and data required by the CE device 3 to perform functions, and includes a storage device such as a hard disk or a semiconductor memory.

The programs stored in the storage unit 28 include an OS (operating system) for realizing basic functions of inputting/outputting a file and controlling each unit of the CE device 3; a browser program for constituting each element from the browser 9 to the encoding module 12 shown in Fig. 3 in a software manner; and an encoding program.

When the CPU 21 executes these programs, the elements from the browser 9 to the encoding module 12 are constituted in a software manner.

The CPU 21, the ROM 22, and the RAM 23 are mutually connected through a bus 24. Also, an input/output interface 25 is connected to the bus 24.

An input unit 26 including a keyboard and a mouse; an output unit 27 including a display, such as a CRT (cathode-ray tube) or an LCD (liquid crystal display), and a speaker; the storage unit 28 including a hard disk or the like; and a communication unit 29 including a modem and a terminal adaptor are connected to the input/output interface 25. The communication unit 29 performs communication through a network.

Various information and commands, such as a URL to be set to the browser 9 and information for operating the applications 8a to 8c, can be input from the input unit 26.

A screen displayed by the browser 9 or the applications 8a to 8c, or moving/still pictures and voices played back by the applications 8a to 8c can be output from the output unit 27.

A drive 30 is connected to the input/output interface 25 as necessary, and a magnetic disk 41, an optical disk 42, a magneto-optical disk 43, or a memory card 44 is loaded thereto. Then, a computer program read therefrom is installed onto the storage unit 28 as necessary.

The configuration of the authentication server 5 and the service server 4 is basically the same as that of the CE device 3, and is not described here.

Fig. 5 shows an example of an EMBED tag included in the authentication trigger.

Line 51 indicates that this tag is an EMBED tag and the browser 9 can recognize the EMBED tag accordingly.

Line 52 defines a MIME format and specifies an application to be started among the applications 8a to 8c.

Line 53 is provided as a dummy and is not specifically related to device authentication. Although the EMBED tag has a function of specifying the download address of content by an SRC parameter, each of the applications 8a to 8c starts the authentication module 7 in the embodiment. Therefore, the dummy line is provided.

Line 54 includes information about device authentication, such as a URL for accessing the authentication server 5 (URL of an authentication site) and information for specifying an authentication service started in the authentication server 5.

Line 55 includes information for specifying a site to be accessed after authentication, such as the URL of a site to be accessed when device authentication is successfully done and the URL of a site to be accessed when authentication cannot be done.

Line 56 defines the version of device authentication. In the figure, device authentication of versions 1.00 and 2.00 is adopted.

There are some versions in device authentication and a service to be received is different depending on the version of device authentication.

The version of device authentication requested by the service server 4a, 4b, or 4c can be specified by line 56.

The CE device 3 accesses the authentication server 5 by using the URL in line 54 (information for accessing the authentication server) included in the EMBED tag and transmits an authentication result to the service server by using the URL included in line 55 (information for accessing the providing server).

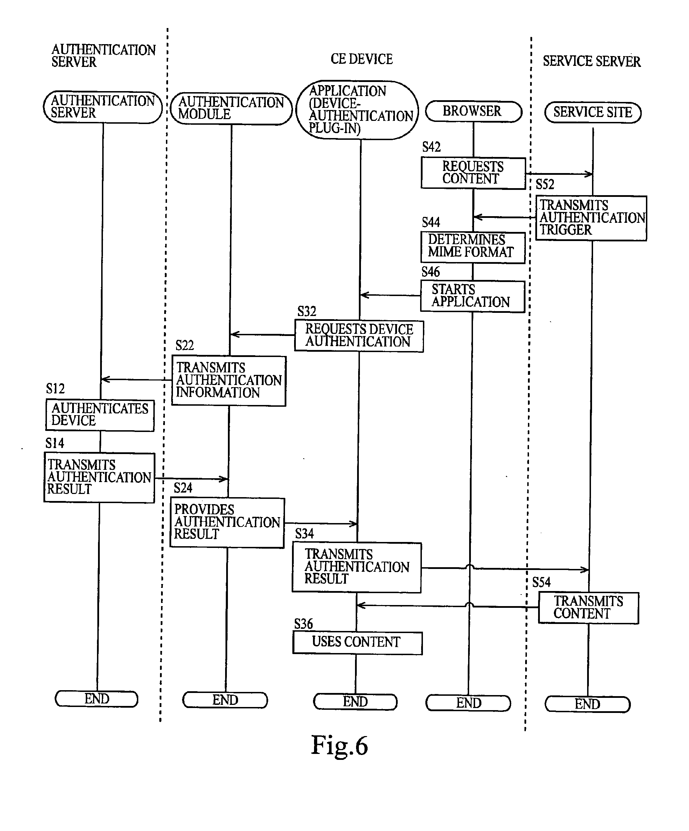

Fig. 6 is a flowchart illustrating a process which is performed when the CE device 3 downloads content requiring device authentication from the service server 4 in the device-authentication system 1.

The following steps are performed by the CPU of each of the CE device 3, the service server 4, and the authentication server 5, according to a predetermined program.

First, in the CE device 3, the browser 9 accesses a service site of the service server 4 and requests transmission of content requiring device authentication (step 42).

Then, the service server 4 transmits an authentication trigger to the browser 9 (step 52). The authentication trigger includes an EMBED tag for starting an application (any of the applications 8a to 8c, hereinafter referred to as application) for using content required by the CE device 3.

The browser 9 receives the authentication trigger from the service server 4 and determines the MIME format in the EMBED tag (step 44).

Then, the browser 9 starts the application specified by the MIME format (step 46).

The application is started by the browser 9, starts the authentication module 7, and requests device authentication to the authentication module 7 (step 32).

The authentication module 7 is started by the application, obtains a device ID and a pass phrase from the authentication-information storage unit 10 (Fig. 3) so as to generate authentication information, and transmits the information to the authentication server 5 (step 22). Incidentally, since the URL of the authentication site of the authentication server 5 is described in the EMBED tag, the authentication module 7 accesses the authentication server 5 by using the URL.

The authentication server 5 receives the authentication information from the authentication module 7 and authenticates the CE device 3 (step 12).

Then, the authentication server 5 transmits the authentication result to the authentication module 7 (step 14).

The authentication module 7 receives the authentication result from the authentication server 5 and provides it to the application (step 24).

The application receives the authentication result from the authentication module 7 and transmits the result to the service server 4 (step 34).

In this way, after the application has been started, the application can independently access the service server 4 and receive necessary data therefrom.

The URL to be accessed when device authentication is successfully done and the URL to be accessed when device authentication cannot be done are described in the EMBED tag. Therefore, the application accesses a site (provided in the service server 4) according to the device authentication result.

The service server 4 receives the device authentication result from the application. If the device has been successfully authenticated, the service server 4 transmits the content to the application (step 54).

The application receives and uses the content (step 36).

On the other hand, if the CE device 3 cannot be authenticated, the service server 4 does not transmit the content.

Alternatively, the authentication server 5 may issue a onetime ID when performing device authentication and attach the onetime ID to the authentication result. In that case, after the service server 4 has received the authentication result, the service server 4 can ask the authentication server 5 whether the authentication server 5 has actually authenticated the device by using the onetime ID.

In the embodiment, the authentication server 5 authenticates the CE device 3. However, if the service server 4 authenticates the device, the authentication module 7 transmits authentication information to the service server 4, and the service server 4 authenticates the information and transmits the content to the CE device 3.

In the above-described embodiment, the following advantages can be obtained.
(1) Every application uses authentication information stored in the authentication-information storage unit 10, and thus authentication information need not be provided for each application. That is, the authentication information can be unified.
(2) All the applications share the authentication module 7, and thus an authentication function need not be provided for each application.
(3) A plug-in mechanism loaded in the existing browser (originally used for starting a module for each application) can be used as a trigger for device authentication.
(4) When content requiring device authentication is to be downloaded, the application 8a, 8b, or 8c stars the authentication module 7 and device authentication is automatically performed. Therefore, processes of searching for/browsing content and using the content by the application can be seamlessly performed.
(5) Since a plug-in is dynamically added to the browser 9, an application 8d and the like can be added.

As described above, the applications 8a to 8c are installed in the CE device 3 in advance in the embodiment. However, the present invention is not limited to this configuration, and another application can be newly installed or an application can be uninstalled.

In addition, although the authentication module 7 is installed in advance in the embodiment, the authentication module 7 may be installed later.

### (Modification 1)

In this modification, the service server 4 requests device authentication before providing a service used on a browser.

In the example shown in Fig. 6, each of the applications 8a to 8c has a content using function for allowing use of content and a startup function (mediating function) for starting the authentication module 7. In the embodiment, content is used in the browser 9, and thus a functional unit corresponding to each of the applications 8a to 8c is the device-authentication plug-in 8 for starting the authentication module 7.

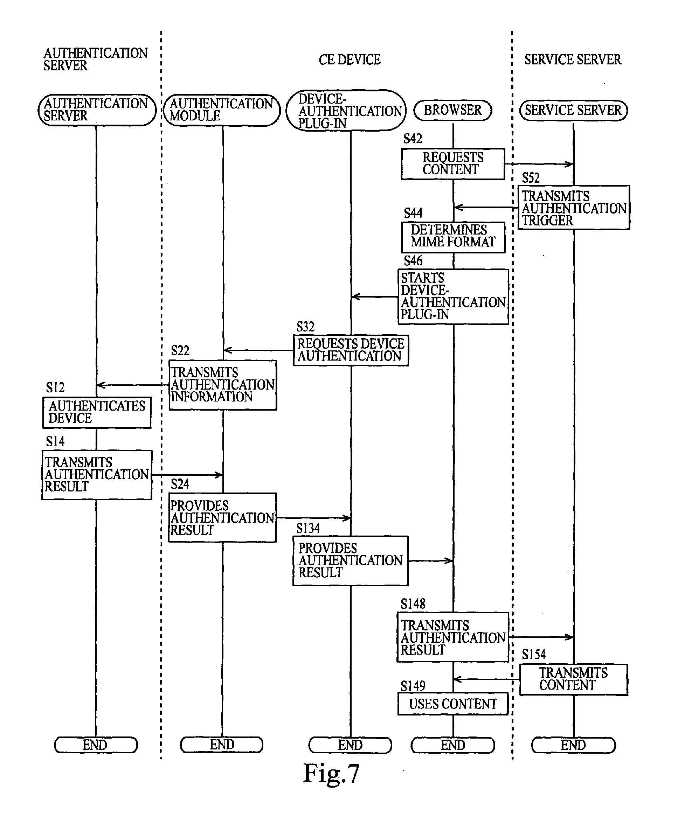

Hereinafter, a process of downloading content according to modification 1 will be described with reference to the flowchart shown in Fig. 7. In the steps from the beginning to step 24, the browser 9 starts the device-authentication plug-in 8 specified by a MIME format (step 46), and the device-authentication plug-in 8 is started by the browser 9, starts the authentication module 7, and asks the authentication module 7 to perform device authentication (step 32). These steps are the same as in Fig. 6, and the corresponding description will be omitted.

In the CE device 3, after the authentication module 7 has provided the authentication result to the device-authentication plug-in 8 (step 24), the device-authentication plug-in 8 provides the authentication result to the browser 9 (step 134).

Then, the browser 9 transmits the authentication result received from the device-authentication plug-in 8 to the service server 4 (step 148).

The URL to be accessed when authentication is successfully done and the URL to be accessed when authentication cannot be done are described in the EMBED tag.

The service server 4 receives the authentication result from the browser 9, and if the device has been successfully authenticated, the service server 4 transmits the content to the browser 9 (step 154).

Then, the browser 9 receives the content from the service server 4 and makes the content available (step 149).

If the device could not be authenticated, the service server 4 does not transmit the content.

In this modification, the system can be configured so that device authentication is requested for the content used in the browser 9.

Also, the device-authentication plug-in 8 can be shared between service sites providing content. That is, any service site that wants to set device authentication for the content used in the browser 9 may use the device-authentication plug-in 8 by specifying the device-authentication plug-in 8 with the MIME format of the EMBED tag.

In this modification, the content is used in the browser 9 after the device has been authenticated. However, the present invention is not limited to this configuration. After the device-authentication plug-in 8 has been started and the device has been authenticated, the contents may be used in another application.

### (Modification 2)

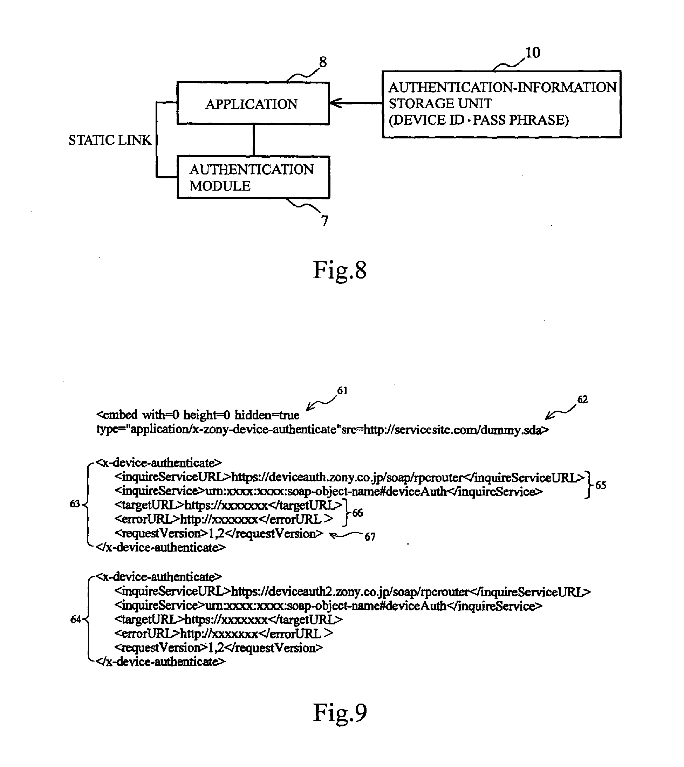

Fig. 8 illustrates a modification of the module in the CE device 3.

In Fig. 3, the authentication-information storage unit 10 provides authentication information to the authentication module 7. In modification 2, the authentication-information storage unit 10 provides authentication information to the application 8a, 8b, or 8c.

In this case, the risk of authentication information being revealed can be reduced by statically linking the applications 8a to 8c and the authentication module 7.

However, by statically linking the applications 8a to 8c and the authentication module 7, the authentication module 7 cannot be shared between applications. Therefore, the authentication module 7 must be provided for each of the applications 8a to 8c.

### (Modification 3)

In modification 3, two authentication servers 5 are provided in the device-authentication system 1.

Fig. 9 illustrates an example of the EMBED tag used in this modification.

This EMBED tag is applied when two authentication servers 5 are provided.

When two authentication servers 5 are provided, even if a trouble occurs in one of the authentication servers 5, the other authentication server 5 can perform device authentication. Also, if the communication with the first accessed authentication server 5 is difficult due to access congestion or the like, device authentication can be performed by using the other authentication server 5.

In Fig. 9, line 61 indicates that this tag is an EMBED tag.

Line 62 defines a MIME format and specifies the application 8 to be started.

Line 63 includes information used when the first (primary) authentication server 5 performs device authentication, and line 64 includes information used when the second (secondary) authentication server 5 performs device authentication.

Line 65 includes information for specifying the URL of the authentication site and an authentication service provided by the authentication site.

Line 66 includes the URL to be accessed when device authentication is successfully done and the URL to be accessed when device authentication cannot be done.

Line 67 includes the version of device authentication.

The structure of line 64 is the same as that of line 63, and thus the corresponding description will be omitted.

As described above, the EMBED tag shown in Fig. 9 includes access information about precedence order of access to the primary and secondary servers.

In the above-described modification 3, two authentication servers 5 can be provided in the device-authentication system 1, and thus device authentication can be speedily performed.

If more authentication servers 5 are provided, the EMBED tag can be generated in the same manner.

### (Modification 4)

In modification 4, there are two types of modes in the authentication module 7 loaded in the CE device 3.

Since various types of CE devices of various manufacturers are used as the CE device 3, the mode of the authentication module 7 may vary accordingly.

Fig. 10 illustrates an example of the EMBED tag used in this modification.

Line 71 indicates that this tag is an EMBED tag.

Line 72 defines a MIME format.

Line 73 includes information corresponding to the first mode and line 74 includes information corresponding to the second mode.

The CE device 3 received this EMBED tag uses information corresponding to a suitable mode of the two modes.

Line 75 includes the URL for specifying the authentication site of the authentication server 5 and information for specifying an authentication service used in this site.

Line 76 includes the URL to be accessed when device authentication is successfully done and the URL to be accessed when device authentication cannot be done.

Line 77 includes the version of device authentication.

The structure of line 74 is the same as that of line 73, and thus the corresponding description will be omitted.

In the above-described modification 4, the device-authentication system 1 can conform to a case where a plurality of the CE device 3 including authentication modules 7 of different modes are provided.

In modification 4, two modes exist in the authentication module 7. However, three or more modes may be adopted.

According to the present invention, authentication can be efficiently performed before allowing use of a service through a network.

## Claims

1. A terminal device comprising display means; mediating means; and authentication-information transmitting means,
wherein the display means comprises a display function for displaying electronic information provided through a network so that a user can browse the information; a specifying-information receiving function for receiving specifying information for specifying the mediating means; and a specifying function for specifying the mediating means by using the received specifying information,
the mediating means is specified by the specifying function and starts the authentication-information transmitting means, and
the authentication-information transmitting means is started by the mediating means and transmits device-authentication information to an authentication server.

2. A terminal device according to Claim 1, further comprising:
authentication-result receiving means for receiving an authentication result from the authentication server;
authentication-result transmitting means for transmitting the received authentication result to a providing server for providing electronic information; and
electronic-information receiving means for receiving electronic information transmitted from the providing server based on the transmitted authentication result.

3. A terminal device according to Claim 2, wherein the mediating means comprises a using function for using electronic information received from the providing server.

4. A terminal device according to Claim 2, further comprising:
requesting means for requesting electronic information to the providing server,
wherein the specifying-information receiving function receives specifying information which is transmitted from the providing server based on the request.

5. A terminal device according to Claim 1, wherein the specifying-information receiving function receives specifying information including access information used for accessing the authentication server, and
the authentication-information transmitting means accesses the authentication server by using the received access information.

6. A terminal device according to Claim 5, wherein the authentication server comprises a plurality of authentication servers, and the specifying-information receiving function receives specifying information including access information for each of the authentication servers ranked in an access precedence order.

7. A terminal device according to Claim 2, wherein the specifying-information receiving function receives specifying information including access information used for accessing the providing server, and
the authentication-result transmitting means accesses the providing server by using the received access information.

8. A providing server for providing electronic information to the terminal device according to Claim 2, comprising:
specifying-information transmitting means for transmitting specifying information used by the display means of the terminal device for specifying the mediating means which starts the authentication-information transmitting means;
authentication-result receiving means for receiving an authentication result from the terminal device; and
electronic-information transmitting means for transmitting electronic information based on the received authentication result.

9. An electronic-information using method performed in a computer comprising display means; mediating means; and authentication-information transmitting means, the method comprising:
a display step of realizing, by the display means, a display function for displaying electronic information provided through a network so that a user can browse the information, a specifying-information receiving function for receiving specifying information for specifying the mediating means, and a specifying function for specifying the mediating means by using the received specifying information;
a mediating step of specifying the mediating means by the specifying function in the display step and allowing the mediating means to start the authentication-information transmitting means; and
an authentication-information transmitting step of transmitting device-authentication information to an authentication server by starting the authentication-information transmitting means in the mediating step.

10. An electronic-information providing method used in a providing server for providing electronic information to the terminal device according to Claim 2,
wherein the providing server comprises specifying-information transmitting means; authentication-result receiving means; and electronic-information transmitting means, and
the electronic-information providing method comprises:
a specifying-information transmitting step of transmitting, by the specifying-information transmitting means, specifying information used by the display means of the terminal device for specifying the mediating means for starting the authentication-information transmitting means;
an authentication-result receiving step of receiving, by the authentication-result receiving means, an authentication result from the terminal device; and
an electronic-information transmitting step of transmitting, by the electronic-information transmitting means, electronic information based on the received authentication result.

11. A terminal-device program for realizing, in a computer, a display function; a mediating function; and an authentication-information transmitting function,
wherein the display function comprises a display function for displaying electronic information provided through a network so that a user can browse the information; a specifying-information receiving function for receiving specifying information for specifying the mediating function; and a specifying function for specifying the mediating function by using the received specifying information,
the mediating function is specified by the specifying function and starts the authentication-information transmitting function, and
the authentication-information transmitting function is started by the mediating function and transmits device-authentication information to an authentication server.

12. A providing-server program for providing electronic information to the terminal device according to Claim 2, the program realizes, in a computer:
a specifying-information transmitting function for transmitting specifying information used by the display function of the terminal device for specifying the mediating function which starts the authentication-information transmitting function;
an authentication-result receiving function for receiving an authentication result from the terminal device; and
an electronic-information transmitting function for transmitting electronic information based on the received authentication result.

13. A computer-readable storage medium storing a terminal-device program for realizing, in a computer, a display function; a mediating function; and an authentication-information transmitting function,
wherein the display function comprises a display function for displaying electronic information provided through a network so that a user can browse the information; a specifying-information receiving function for receiving specifying information for specifying the mediating function; and a specifying function for specifying the mediating function by using the received specifying information,
the mediating function is specified by the specifying function and starts the authentication-information transmitting function, and
the authentication-information transmitting function is started by the mediating function and transmits device-authentication information to an authentication server.

14. A computer-readable storage medium storing a providing-server program for providing electronic information to the terminal device according to Claim 2, the program realizes, in a computer:
a specifying-information transmitting function for transmitting specifying information used by the display function of the terminal device for specifying the mediating function which starts the authentication-information transmitting function;
an authentication-result receiving function for receiving an authentication result from the terminal device; and
an electronic-information transmitting function for transmitting electronic information based on the received authentication result.

15. A terminal device comprising information communication means; electronic-information using means; and authentication-information management means,
wherein the information communication means comprises a function for receiving authentication-trigger information required for using electronic information provided through a network; a function for analyzing specifying information for specifying the electronic-information using means based on the authentication-trigger information; and a specifying function for specifying the electronic-information using means based on the specifying information,
the electronic-information using means is specified by the specifying function and starts the authentication-information management means, and
the authentication-information management means is started by the electronic-information using means, reads device-authentication information, and transmits the information to an authentication server.

16. A terminal device according to Claim 15,
wherein the authentication-information management means receives an authentication result from the authentication server,
the electronic-information using means transmits the authentication result to a providing server which provides electronic information, and
the information communication means receives electronic information transmitted from the providing server based on the authentication result.

17. A terminal device according to Claim 16, wherein the electronic-information using means comprises a using function for using electronic information received from the providing server.

18. A terminal device according to Claim 17, wherein the electronic-information using means allows a user to browse electronic information, plays back electronic information as music content, or plays back electronic information as moving-picture content.

19. A terminal device according to Claim 15, wherein the authentication-trigger information includes authentication-server access information used for accessing the authentication server.

20. A terminal device according to Claim 19, wherein the authentication-trigger information includes authentication-server access information for each of the authentication servers ranked in an access precedence order.

21. A terminal device according to Claim 16, wherein the authentication-trigger information includes providing-server access information used for accessing the providing server, and the authentication result is transmitted to the providing server by using the providing-server access information.

22. A providing server for providing electronic information requiring authentication to a terminal device, comprising:
authentication-trigger-information transmitting means for transmitting, to the terminal device, authentication-trigger information including specifying information for specifying electronic-information using means which starts authentication-information management means;
authentication-result receiving means for receiving, from the terminal device, an authentication result of the terminal device generated in an authentication server; and
electronic-information providing means for providing electronic information based on the received authentication result.

23. An electronic-information using method performed in a terminal device comprising information communication means; electronic-information using means; and authentication-information management means, the method comprising:
an information communication step of processing, by the information communication means, a function for receiving authentication-trigger information required for using electronic information provided through a network, a function for analyzing specifying information for specifying the electronic-information using means based on the authentication-trigger information, and a specifying function for specifying the electronic-information using means based on the specifying information;
a starting step of starting the authentication-information management means by being specified by the specifying function in the information communication step; and
an authentication-information management step of starting the authentication-information management means in the starting step, reading device-authentication information, and transmitting the information to an authentication server.

24. An electronic-information using method according to Claim 23,
wherein, in the authentication-information management step, the authentication-information management means receives an authentication result from the authentication server and transmits the authentication result to a providing server for providing electronic information, and
the information communication step comprises an electronic-information receiving step, in which the information communication means receives electronic information transmitted from the providing server based on the authentication result.

25. An electronic-information using method according to Claim 24, further comprising an electronic-information using step, in which the electronic-information using means further comprises a using function for using electronic information received from the providing server.

26. An electronic-information using method according to Claim 25, wherein the electronic-information using means allows a user to browse the electronic information, plays back electronic information as music content, or plays back electronic information as moving-picture content.

27. An electronic-information using method according to Claim 23, wherein the authentication-trigger information includes authentication-server access information used for accessing the authentication server.

28. An electronic-information using method according to Claim 27, wherein the authentication-trigger information includes authentication-server access information for each of the authentication servers ranked in an access precedence order.

29. An electronic-information using method according to Claim 24, wherein the authentication-trigger information includes providing-server access information used for accessing the providing server, and, in the authentication-information management step, the authentication result is transmitted to the providing server by using the providing-server access information.

30. An electronic-information providing method performed in a providing server for providing electronic information requiring authentication to a terminal device, the method comprising:
an authentication-trigger-information transmitting step of transmitting, to the terminal device, authentication-trigger information including specifying information for specifying electronic-information using means for starting authentication-information management means;
an authentication-result receiving step of receiving, from the terminal device, an authentication result of the device generated in an authentication server; and
an electronic-information providing step of providing electronic information based on the received authentication result.

31. A terminal-device program comprising an information communication function; an electronic-information using function; and an authentication-information management function,
wherein the information communication function comprises a function for receiving authentication-trigger information required for using electronic information provided through a network, a function for analyzing specifying information for specifying the electronic-information using means based on the authentication-trigger information, and a specifying function for specifying the electronic-information using means based on the specifying information,
the electronic-information using means is specified by the specifying function and starts the authentication-information management means, and
the authentication-information management means is started by the electronic-information using means, reads device-authentication information, and transmits the information to an authentication server.

32. A terminal-device program according to Claim 31,
wherein the following functions are realized in a computer:
an authentication-result receiving function for receiving an authentication result from the authentication server;
an authentication-result transmitting function for transmitting the received authentication result to a providing server for providing electronic information; and
an electronic-information receiving function for receiving electronic information transmitted from the providing server based on the transmitted authentication result.

33. A terminal-device program according to Claim 31,
wherein the electronic-information using function comprises a using function for using electronic information received from the providing server.

34. A terminal-device program according to Claim 33,
wherein the electronic-information using function allows a user to browse the electronic information, plays back electronic information as music content, or plays back electronic information as moving-picture content.

35. A terminal-device program according to Claim 31,
wherein the authentication-trigger information includes authentication-server access information used for accessing the authentication server.

36. A terminal-device program according to Claim 31,
wherein the authentication server comprises a plurality of authentication servers, and the authentication-trigger information includes authentication-server access information for each of the authentication servers ranked in an access precedence order.

37. A terminal-device program according to Claim 32,
wherein the authentication-trigger information includes access information used for accessing the providing server, and the authentication result is transmitted to the providing server by using the providing-server access information.

38. A providing-server program performed in a providing server for providing electronic information requiring authentication to a terminal device, wherein the following functions are realized in a computer:
an authentication-trigger-information transmitting function for transmitting, to the terminal device, authentication-trigger information including specifying information for specifying electronic-information using means for starting authentication-information management means;
an authentication-result receiving function for receiving, from the terminal device, an authentication result of the device generated in an authentication server; and
an electronic-information providing function for providing electronic information based on the received authentication result.
